# EUROPÄISCHE PATENTSCHRIFT

(11) **EP 0 869 840 B1**
(45) Veröffentlichungstag und Bekanntmachung des Hinweises auf die Patenterteilung: **18.08.1999**
(21) Anmeldenummer: 96943981.9
(22) Anmeldetag: 17.12.1996
(51) Int. Cl.: B01D 53/04

(54) **FILTERANORDNUNG**
FILTER ARRANGEMENT
DISPOSITIF DE FILTRATION

(30) Priorität: 22.12.1995 DE 19548180
(43) Veröffentlichungstag der Anmeldung: 14.10.1998
(73) Patentinhaber: FILTERWERK MANN & HUMMEL GMBH, 71631 Ludwigsburg (DE)
(72) Erfinder: HUMMEL, Karl, Ernst, D-74321 Bietigheim-Bissingen (DE); LUKA, Helmut, D-70806 Kornwestheim (DE); SOMMER, Bruno, D-71636 Ludwigsburg (DE)
(74) Vertreter: Voth, Gerhard, Dipl.-Ing.
(86) Internationale Anmeldenummer: EP9605664
(87) Internationale Veröffentlichungsnummer: WO9723271

(56) Entgegenhaltungen:
- EP-A- 0 517 021
- DE-A- 2 708 613
- GB-A- 2 198 053
- US-A- 4 133 651
- US-A- 4 234 326

## Beschreibung

Die Erfindung betrifft eine Filteranordnung mit einer Vielzahl von Filterkammern nach dem Oberbegriff des Anspruchs 1.

### Stand der Technik

Es ist bereits eine Filteranordnung mit einer Vielzahl von Filterkammern mit einem rechteckigen Zellrahmen aus der GB-A-2 198 053 bekannt, deren Filterkammern jeweils mit Aktivkohle gefüllt sind. Die Zellstruktur dieser Filterkammern ist eine Wabenstruktur, die entweder aus Preßpapier, aus Zellulose oder aus Metall hergestellt ist. Auf diese Wabenstruktur wird beidseitig ein für das zu filternde Medium durchlässiges Filtersieb unter Einschluß der Aktivkohle aufgeklebt. Zum Aufkleben wird auf die Stirnseiten der Wabenstruktur ein flüssiger Kleber aufgetragen, der nach dem Auflegen des jeweiligen Filtersiebs aushärtet.

Nachteilig bei der bekannten Wabenstruktur ist die relativ aufwendige Herstellung, die in der Regel nur aus einem Stück erfolgen kann und im Randbereich der Wabenstruktur zwangsläufig zu Änderungen der Filterkammergröße führt. Da für die meisten Anwendungsgebiete ein glatter Zellrahmen erforderlich ist, da die gesamte Filteranordnung in eine weitere Vorrichtung eingefügt werden muß, weisen die Filterkammern am Rand ein wesentlich geringere Durchtrittsfläche auf um die Filterkammern zu begradigen. Zusätzlich zum Mehraufwand bei der Herstellung ist somit der Durchtritt des zu filternden Mediums hier ungleich verteilt.

### Aufgabenstellung

Der Erfindung liegt die Aufgabe zugrunde, eine Filteranordnung zu schaffen, die einfach herzustellen ist und eine optimale Durchtrittsfläche für das zu filternde Medium bildet.

Diese Aufgabe wird durch die Merkmale des Anspruchs 1 gelöst.

### Vorteile der Erfindung

Die Filteranordnung der eingangs genannten Art ist in vorteilhafter Weise erfindungsgemäß so weitergebildet, daß ein Zellrahmen in einfacher Weise mit Zwischenwänden versehen werden kann, so daß sich rechteckige bzw. quadratische Filterkammern bilden. Die Filterkammern sind durch eine optimale Aufteilung der Zwischenwände bei einer gegebenenfalls vorgegebenen Höhe des Zellrahmens so bemessen, daß ein für den Filterprozeß günstiges Volumen des Aktivkohle-Granulats eingefüllt werden kann.

Da der rechteckige Zellrahmen mit den Zwischenwänden in einfacher Weise aus eventuell bereits standardisiert hergestellten Kunststoffgittern bestehen kann, ist es auch möglich, das Filtergewebe zum Einschluß der Aktivkohle in den Filterkammern in die Stirnseiten des Zellrahmens und der Zwischenwände zumindest teilweise formschlüssig unter Hitzeeinwirkung einzudrücken bzw. auch zu verschmelzen. Das Filtergewebe ist hierzu vorzugsweise aus einem PolyesterSiebgewebe hergestellt. Nach dem Verbinden des Zellrahmens und der Zwischenwänden mit dem ersten Filtergewebe wird die Aktivkohle in die Filterkammern eingefüllt und durch das oben beschriebene Verbinden mit dem zweiten Filtergewebe eingeschlossen.

Eine optimale Filterwirkung kann in vorteilhafter Weise mit einer Schichtanordnung verschiedener Granulate erreicht werden, da hier in Strömungsrichtung des zu filternden Mediums eine an die jeweils auszufilternden Partikeln angepasste Granulatstruktur nacheinander durchströmt werden kann.

Die Herstellung der Zellstruktur ist in einer anderen vorteilhaften Ausführungsform auch derart möglich, daß das Filtergewebe zunächst in ein entsprechendes Werkzeug eingeführt wird und dann anschließend der Zellrahmen mit den Zwischenwänden in einem Kunststoff-Spritzgußverfahren aufgespritzt wird.

Eine sichere und feste Einschließung des AktivkohleGranulats läßt sich auf einfache Weise durch die in den Unteransprüchen angegeben Schrumpfung von eingeprägten oder durch das Einfüllen hervorgerufener Wölbungen an mindestens einem äußeren Filtersieb nach dem Einfüllen des Granulats erreichen.

Besonders vorteilhaft hat sich die Bemessung der Durchtrittsfläche der einzelnen Filterkammern in einem Bereich von ca. 400 mm² oder geringfügig kleiner herausgestellt. Das Aktivkohle-Granulat hat vorzugsweise eine Körnung von ca. 8 * 12 und kann auch zusätzlich mit PUR-Schaum oder anderen elastischen Kunststoffteilen vermischt werden. Durch die Beimischung der Kunststoffteile kann eine ständige Vorspannung im Granulat erzeugt werden, die ein Separieren der Aktivkohleteilchen, sowie Geräusche durch Bewegungen verhindert. Auch kann durch eine entsprechende Mischung und einer eventuell veränderten Aktivkohle-Granulatgröße der Durchlaßwiderstand und die Adsorptionseigenschaft der Filteranordnung positiv beeinflußt werden.

Bei der zusätzlichen Verwendung eines Zugankers als Verstärkungselement nach einem der Unteransprüche ist es in vorteilhafter Weise möglich, daß die Filterkammern bis zum 4 fachen der oben angegebenen Bemessung vergrößert werden können. Es entfallen daher bei gleicher Außengröße der Filteranordnung eine Anzahl Zwischenwände, wodurch das Filtervolumen insgesamt vergrößert wird. Der Zuganker kann auf einfache Weise über ein Befestigungskreuz am Boden der Filterkammer befestigt werden. Alternativ ist auch die nachträgliche Einbringung eines Stiftes oder eines Niets als Zuganker möglich, der mindestens ein Filtergewebe durchstoßen und daran gehalten werden kann.

Andere vorteilhafte Ausführungsformen sind in den weiteren Unteransprüchen angegeben.

### Zeichnungen

Die Erfindung wird anhand eines Ausführungsbeispiels in den Zeichnungen erläutert. Es zeigen:
Figur 1 eine Ansicht einer Filteranordnung mit Filterkammern;
Figur 2 eine Detailansicht einer Filterkammer mit einem Zuganker als Verstärkungselement,
Figur 3 ein Detail eins vorgewölbten äußeren Filtersiebs und
Figur 4 einen Schnitt durch eine Filterkammer mit Granulatschichten.

### Beschreibung der Ausführungsbeispiele

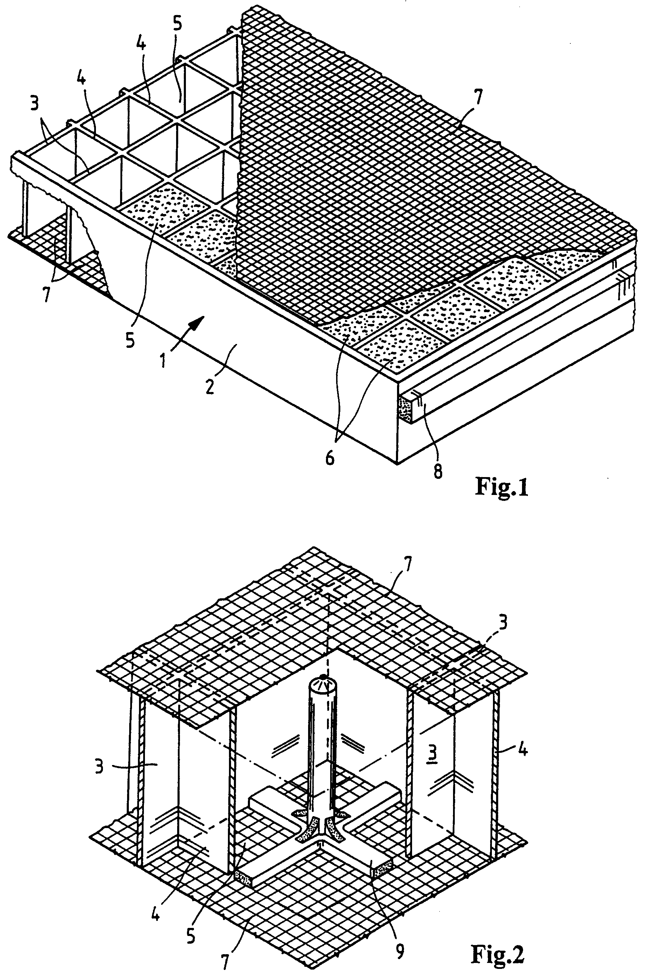

In Figur 1 ist eine Filteranordnung 1 gezeigt, die einen rechteckigen Zellrahmen 2 mit Zwischenwänden 3 und 4 aus Kunststoff (zum Beispiel Polypropylen) enthält. Die Zwischenwände 3 und 4 sowie Außenbereich der Zellrahmen 2 bilden Filterkammern 5, in die ein Aktivkohle-Granulat 6 und gegebenenfalls eine Zumischung aus PUR-Schaum oder sonstigen Kunststoffteilen eingefüllt ist. Die Filterkammern 5 sind beidseitig mit einem Filtergewebe 7, beispielsweise einem Polyester-Siebgewebe, abgeschlossen.

Das Filtergewebe 7 kann beim dargestellten Ausführungsbeispiel durch formschlüssiges Eindrücken unter Hitzeeinwirkung in die Stirnseiten der Zwischenwände 3 und 4 sowie des Zellrahmens 2 eingebracht werden. Bei einer alternativen Herstellungsweise wird die Zellstruktur 2,3,4 in einem Spritzgußverfahren auf das erste Filtergewebe 7 aufgespritzt. Nach der Bildung der zunächst offenen Filterkammern 5 wird das Aktivkohle-Granulat und eventuell die Zumischung eingefüllt und sodann der Zellrahmen 2 mit dem zweiten Filtergewebe 7 in gleicher Weise wie oben beschrieben verschlossen.

Außen am Zellrahmen 2 ist eine Dichtung 8 angefügt, die beim Einfügen der Filteranordnung 1 in eine Vorrichtung die Filteranordnung derart abdichtet, daß kein Bypass für das zu filternde Medium entsteht.

Aus Figur 2 ist eine Detaildarstellung einer Filterkammer 5 ersichtlich, bei der im Inneren eine Verstärkungselement 9 eingebracht ist, das eine mechanische Stabilisierung des Aktivkohle-Granulats und gegebenenfalls der Zumischungen im Kammervolumen gewährleistet. Das Verstärkungselement 9 kann beispielsweise als Zuganker ausgebildet sein, der über ein Befestigungskreuz am Boden der Filterkammer 5 gehalten ist. Weitere Alternativen sind hier möglich, beispielsweise kann sich das Verstärkungselement 9 auch als Stift oder Niet eventuell auch nur zwischen einigen Wänden oder Ecken der Filterkammer 5 erstrecken. In diesem Fall könnten beispielsweise die Filtergewebe 7 zur Befestigung des Verstärkungselements 9 durchstoßen werden.

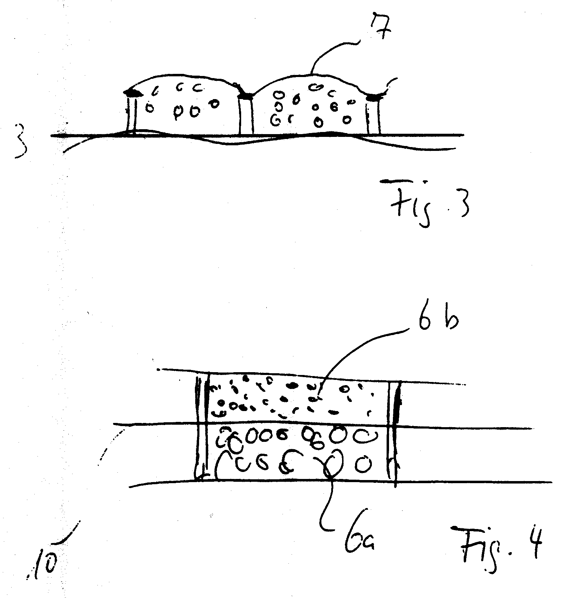

Bei dem Ausführungsbeispiel einer Filteranordnung nach Figur 3 ist das äußere Filtergewebe 7 gewölbt auf den Zellrahmen 2 mit den Zwischenwänden 3,4 aufgebracht. Nach dem Einfüllen des Aktivkohle-Granulats wird das Filtergewebe 7 unter Hitzeeinwirkung geschrumpft und damit wieder eine ebene Filtergewebefläche hergestellt. Das Filtergewebe 7 kann auch derart auf den Zellrahmen 2 mit den Zwischenwänden 3 oder 4 aufgebracht werden, dass sich dieses durch das Einfüllen des Aktivkohle-Granulats 7 wölbt und danach wie oben beschrieben geschrumpft werden kann.

Beim Ausführungsbeispiel nach Figur 4 sind in den Filterkammern 5 Schichten 6a und 6b von Aktivkohle-Granulat unterschiedlicher Zusammensetzung mit jeweils ungleicher Korngröße angeordnet. Die Schichten 6a und 6b sind mittels zusätzlicher Siebgewebelagen 10 voneinander getrennt, so dass das zu filternde Medium die Schichten nacheinander durchströmt.

## Patentansprüche

1. Filteranordnung, mit
- einer Zellstruktur (2,3,4) in der sich eine Vielzahl von Filterkammern (5) in Strömungsrichtung des zu filternden Mediums erstrecken, mit
- jeweils einem Filtergewebe (7) auf beiden Seiten eines rechteckigen Zellrahmens (2), das die Filterkammern (5) beidseitig abschließt und mit
- einer Füllung aus überwiegend Aktivkohle-Granulat (6) in jeder Filterkammer (5), **dadurch gekennzeichnet, dass**
- die Zellstruktur (2,3,4) mit jeweils rechteckigen Filterkammern (5) durch entsprechende, rechtwinklig zueinander angeordnete, Zwischenwände (3,4) innerhalb des Zellrahmens (2) gebildet ist.

2. Filteranordnung nach Anspruch 1, **dadurch gekennzeichnet, dass**
- sich in den Filterkammern (5) Aktivkohle-Granulat (6) unterschiedlicher Zusammensetzung mit gleicher Korngröße gemischt befindet.

3. Filteranordnung nach Anspruch 1, **dadurch gekennzeichnet, dass**
- in den Filterkammern (5) sich Schichten von Aktivkohle-Granulat unterschiedlicher Zusammensetzung mit jeweils ungleicher Korngröße befinden und dass
- die Schichten mittels zusätzlicher Siebgewebelagen voneinander getrennt sind, so dass das zu filternde Medium die Schichten nacheinander durchströmt.

4. Filteranordnung nach einem der vorhergehenden Ansprüche, **dadurch gekennzeichnet, dass**
- der Zellrahmen (2) mit den Zwischenwänden (3,4) aus einem unter Hitzeeinwirkung schmelzfähigem Kunststoff ist und das jeweilige Filtergewebe (7) formschlüssig in die Oberfläche des Zellrahmens (2) mit den Zwischenwänden (3,4) eindrückbar ist.

5. Filteranordnung nach Anspruch 4, **dadurch gekennzeichnet, dass**
- ein Filtergewebe (7) auf einer Seite der Zellstruktur (2,3,4) vor der Einfüllung des Aktivkohle-Granulats (6) bereits mit dem Zellrahmen (2) und den Zwischenwänden (3,4) zusammengefügt ist.

6. Filteranordnung nach einem der Ansprüche 4 oder 5, **dadurch gekennzeichnet, dass**
- der Zellrahmen (2) und die Zwischenwände (3,4) in einem Kunststoff-Spritzgußverfahren auf das eine Filtergewebe (7) und gegebenenfalls auf die zusätzlichen Siebgewebelagen aufgespritzt ist.

7. Filteranordnung nach einem der vorhergehenden Ansprüche, **dadurch gekennzeichnet, dass**
- die jeweiligen Filtergewebe (7) aus einem Polyester-Siebgewebe hergestellt sind.

8. Filteranordnung nach einem der vorhergehenden Ansprüche, **dadurch gekennzeichnet, dass**
- mindestens ein Filtergewebe (7) gewölbt auf den Zellrahmen (2) mit den Zwischenwänden (3,4) aufgebracht ist und nach dem Einfüllen des Aktivkohle-Granulats (7) schrumpfbar zur Herstellung einer ebenen Filtergewebefläche ist.

9. Filteranordnung nach einem der vorhergehenden Ansprüche 1 bis 7, **dadurch gekennzeichnet, dass**
- mindestens ein Filtergewebe (7) derart auf den Zellrahmen (2) mit den Zwischenwänden (3,4) aufgebracht ist, dass sich dieses durch das Einfüllen des Aktivkohle-Granulats (7) wölbt und danach schrumpfbar zur Herstellung einer ebenen Filtergewebefläche ist.

10. Filteranordnung nach einem der vorhergehenden Ansprüche, **dadurch gekennzeichnet, dass**
- die Filterkammern (5) quer zur Strömungsrichtung des zu filternden Mediums einen quadratischen Querschnitt mit einer Durchtrittsfläche von ca. 400 mm² aufweisen.

11. Filteranordnung nach einem der vorhergehenden Ansprüche, **dadurch gekennzeichnet, dass**
- dem Aktivkohle-Granulat (6) elastische Teile, vorzugsweise PUR-Schaum oder sonstige Kunststoffteile, zugesetzt sind.

12. Filteranordnung nach einem der vorhergehenden Ansprüche, **dadurch gekennzeichnet, dass**
- dem Aktivkohle-Granulat (6) ein Imprägniermittel zugesetzt ist.

13. Filteranordnung nach einem der vorhergehenden Ansprüche, **dadurch gekennzeichnet, dass**
- in den Filterkammern (5) Verstärkungselemente (9) zur mechanischen Stabilisierung des Aktivkohle-Granulats (6) eingebracht sind, die zwischen mindestens zwei jeweils gegenüberliegenden Wänden oder Ecken abgestützt sind.

14. Filteranordnung nach Anspruch 13, **dadurch gekennzeichnet, dass**
- als Verstärkungselement (9) ein Zuganker vorhanden ist, der über ein Befestigungskreuz am Boden der Filterkammer (5) gehalten ist.

15. Filteranordnung nach Anspruch 13, **dadurch gekennzeichnet, dass**
- als Verstärkungselement (9) ein Stift oder Niet vorhanden ist, der mindestens ein Filtergewebe (7) durchstößt und an diesem gehalten ist.

16. Filteranordnung nach einem der vorhergehenden Ansprüche, **dadurch gekennzeichnet, dass**
- der Zellrahmen (2) an mindestens einer Seite an seinen umlaufenden äußeren Rand mit einer aufklebbaren Dichtung (8) versehen ist.

## Claims

1. Filter arrangement, having
- a cell structure (2,3,4), in which a plurality of filter chambers (5) extend in the direction of flow of the medium to be filtered,
- a filter cloth (7) on each side of a rectangular cell frame (2), which terminates the filter chambers (5) on each side, and
- a filling of predominantly activated carbon granules (6) in each filter chamber (5), characterised in that
- the cell structure (2,3,4), provided respectively with rectangular filter chambers (5), is formed by corresponding intermediate walls (3,4) within the cell frame (2), said walls being disposed at right angles to one another.

2. Filter arrangement according to claim 1, characterised in that
- activated carbon granules (6), of different compositions with identical particle sizes, are situated in mixed form in the filter chambers (5).

3. Filter arrangement according to claim 1, characterised in that
- layers of activated carbon granules, of different compositions with dissimilar particle sizes, are situated in the filter chambers (5), and in that
- the layers are separated from one another by means of additional filter mesh plies, so that the medium to be filtered flows through the layers one after the other.

4. Filter arrangement according to one of the preceding claims, characterised in that
- the cell frame (2), provided with the intermediate walls (3,4), is formed from a plastics material which is meltable by the effect of heat, and the respective filter cloth (7) can be urged in a form-fitting manner into the surface of the cell frame (2) provided with the intermediate walls (3,4).

5. Filter arrangement according to claim 4, characterised in that
- a filter cloth (7) is already joined to the cell frame (2) and the intermediate walls (3,4) on one side of the cell structure (2,3,4) prior to the introduction of the activated carbon granules (6).

6. Filter arrangement according to one of claims 4 or 5, characterised in that
- the cell frame (2) and the intermediate walls (3,4) are injection-moulded, in a plastics material injection moulding process, onto one filter cloth (7) and possibly onto the additional filter mesh plies.

7. Filter arrangement according to one of the preceding claims, characterised in that
- the filter cloths (7) are each produced from a polyester filter mesh.

8. Filter arrangement according to one of the preceding claims, characterised in that
- at least one filter cloth (7) is applied, in a domed manner, to the cell frame (2) provided with the intermediate walls (3,4) and is shrinkable after the introduction of the activated carbon granules (6) to produce a flat filter cloth surface.

9. Filter arrangement according to one of the preceding claims, characterised in that
- at least one filter cloth (7) is applied to the cell frame (2), provided with the intermediate walls (3,4), in such a manner that said cloth domes as a result of the activated carbon granules (6) being introduced and is thereafter shrinkable to produce a flat filter cloth surface.

10. Filter arrangement according to one of the preceding claims, characterised in that
- the filter chambers (5) have, at right angles relative to the direction of flow of the medium to be filtered, a square cross-section with a through-flow area of approx. 400 mm².

11. Filter arrangement according to one of the preceding claims, characterised in that
- resilient parts, preferably expanded polyurethane or other plastics material parts, are added to the activated carbon granules (6).

12. Filter arrangement according to one of the preceding claims, characterised in that
- an impregnating agent is added to the activated carbon granules (6).

13. Filter arrangement according to one of the preceding claims, characterised in that
- reinforcing members (9) are introduced in the filter chambers (5) for the mechanical stabilisation of the activated carbon granules (6), which members are each supported between at least two oppositely situated walls or corners.

14. Filter arrangement according to claim 13, characterised in that
- a tie rod is provided as the reinforcing member (9), which is retained on the base of the filter chamber (5) via a cross-shaped securing means.

15. Filter arrangement according to claim 13, characterised in that
- a pin or rivet is provided as the reinforcing member (9), which extends through at least one filter cloth (7) and is retained thereon.

16. Filter arrangement according to one of the preceding claims, characterized in that
- the cell frame (2) is provided with an adhesive seal (8) on at least one side on its circumferential outer edge.

## Revendications

1. Dispositif de filtration comportant :
- une structure cellulaire (2, 3, 4) dans laquelle une pluralité de chambres de filtration (5) s'étendent dans la direction de l'écoulement du milieu à filtrer,
- avec chaque fois un tissu filtrant (7) placé sur les deux faces d'un cadre de cellule (2) rectangulaire, qui délimite des deux côtés les chambres de filtration (5),
- un remplissage constitué principalement d'un granulat de charbon actif (6) placé dans chaque chambre de filtration (5),
caractérisé en ce que
la structure cellulaire (2,3,4) chaque fois dotée des chambres de filtration (5) rectangulaires est constituée par des parois intermédiaires (3,4) correspondantes, disposées à angle droit les unes par rapport aux autres à l'intérieur du cadre de cellule (2).

2. Dispositif de filtration selon la revendication 1,
caractérisé en ce qu'
un granulat de charbon actif (6) de composition différente, ayant la même taille de grain, à l'état mélangé, est placé dans les chambres de filtration (5).

3. Dispositif de filtration selon la revendication 1,
caractérisé en ce que
• des couches de granulat de charbon actif de composition différente, avec chaque fois une taille de grain inégale, sont placées dans les chambres de filtration (5)
• les couches sont séparées les unes des autres au moyen de couches de tissu de tamisage supplémentaires faisant que l'écoulement du milieu à filtrer traverse les couches les unes après les autres.

4. Dispositif de filtration selon l'une des revendications précédentes,
caractérisé en ce que
le cadre de cellule (2) doté des parois intermédiaires (3, 4) est constitué d'une matière plastique fusible sous l'effet de la chaleur et le tissu filtrant (7) respectif est susceptible d'être enfoncé, avec liaison par ajustement de forme, dans la surface du cadre de cellule (3) doté des parois intermédiaires (3, 4).

5. Dispositif de filtration selon la revendication 4, caractérisé en ce qu'
un tissu filtrant (7) est déjà assemblé sur une face de la structure cellulaire (2, 3, 4) avant le remplissage en granulat de charbon actif (6), avec le cadre de cellule (2) et les parois intermédiaires (3, 4).

6. Dispositif de filtration selon l'une des revendications 4 ou 5,
caractérisé en ce que
le cadre de cellule (2) et les parois intermédiaires (3, 4) sont fabriqués par un procédé de moulage par injection de matière plastique, sur l'un des tissus filtrants (7) et, le cas échéant, sur les couches de tissu de tamisage supplémentaires.

7. Dispositif de filtration selon l'une des revendications précédentes,
caractérisé en ce que
le tissu filtrant (7) respectif est fabriqué à partir d'un tissu de tamisage en polyester.

8. Dispositif de filtration selon l'une des revendications précédentes,
caractérisé en ce qu'
au moins un tissu filtrant (7) est appliqué de façon incurvée sur le cadre de cellule (2) doté des parois intermédiaires (3, 4) et peut être rétracté après introduction du granulat de charbon actif (7), pour constituer une surface de tissu filtrant plane.

9. Dispositif de filtration selon l'une des revendications 1 à 7 précédentes,
caractérisé en ce qu'
au moins un tissu filtrant (7) est appliqué sur le cadre de cellule (2) doté des parois intermédiaires (3, 4), de manière que celui-ci s'incurve sous l'effet du remplissage par le granulat en charbon actif (7) et puisse ensuite être rétracté pour constituer une surface de tissu filtrant plane.

10. Dispositif de filtration selon l'une des revendications précédentes,
caractérisé en ce que
les chambres de filtration (5) présentent transversalement par rapport à la direction d'écoulement du milieu à filtrer une section transversale carrée ayant une surface de passage d'environ 400 mm².

11. Dispositif de filtration selon l'une des revendications précédentes,
caractérisé en ce qu'
on ajoute au granulat de charbon actif (6) des parties élastiques, de préférence de la mousse de polyuréthane ou d'autres parties de matière plastique.

12. Dispositif de filtration selon l'une des revendications précédentes,
caractérisé en ce qu'
on ajoute un agent d'imprégnation au granulat de charbon actif (6).

13. Dispositif de filtration selon l'une des revendications précédentes,
caractérisé en ce qu'
on introduit dans les chambres de filtration (5) des éléments de renforcement (6) destinés à stabiliser mécaniquement le granulat de charbon actif (6), ces éléments de renforcement étant soutenus entre au moins deux parois ou angles chaque fois opposés.

14. Dispositif de filtration selon la revendication 13,
caractérisé en ce que
comme élément de renforcement (9) est prévu un tirant, maintenu au fond de la chambre de filtration (5) par l'intermédiaire d'un croisillon de fixation.

15. Dispositif de filtration selon la revendication 13,
caractérisé en ce que
comme élément de renforcement (6) est prévu une tige ou un rivet, transperçant au moins un tissu filtrant (7) et est maintenu sur celui-ci.

16. Dispositif de filtration selon l'une des revendications précédentes,
caractérisé en ce que
le cadre de cellule (2) est doté, sur au moins un côté, sur son bord extérieur de pourtour, d'un joint d'étanchéité (8) pouvant être rapporté par collage.
